# EUROPEAN PATENT APPLICATION

(11) **EP 3 851 718 A1**
(43) Date of publication of application: **21.07.2021**
(21) Application number: 19946828.1
(22) Date of filing: 27.09.2019
(51) Int. Cl.: F16K 15/06, F16K 1/36, F16K 1/42

(54) **VALVE CORE**

(71) Applicant: Pacific Industrial Co., Ltd., Ogaki-shi, Gifu 503-8603 (JP)
(72) Inventor: SUGINO, Takumi, Ogaki-shi, Gifu 503-8603 (JP)
(74) Representative: Kramer Barske Schmidtchen Patentanwälte PartG mbB
(86) International application number: PCT/JP2019/038106
(87) International publication number: WO 2021/059470

(57) **Abstract**

[Problem to be solved] To meet a requirement of a reduction in weight.

[Solution] A valve core 10 of the present disclosure includes a core body 11 screwed with a core mounting hole 52. The core body 11 is formed of two components, namely, a support base 12 including a male screw part 12N screwed with a female screw part 57 of the core mounting hole 52, and a seal ring 19 fitted with the support base 12. The support base 12 includes a sleeve part 13 on which the seal ring 19 is mounted and a plate part 15, which are juxtaposed to each other. The whole male screw part 12N is formed in the plate part 15.

## Description

### TECHNICAL FIELD

The present disclosure relates to a valve core which is screw-mounted on a core mounting hole.

### BACKGROUND ART

A known valve core of this type includes a core body which is screwed with a female screw part of a core mounting hole. The core body is formed of two components, namely; a seal ring which is brought into close contact with a tapered part of the core mounting hole on the deeper side than the female screw part; and a support base including a male screw part screwed with the female screw part and a sleeve part to which the seal ring is externally fitted (for example, see Patent Literature 1).

### RELATED ART DOCUMENTS

### PATENT DOCUMENTS

Patent Document 1: Japanese Unexamined Patent Application Publication No. 2005-036963 (see FIG. 1)

### SUMMARY OF THE INVENTION

### PROBLEMS TO BE SOLVED BY THE INVENTION

A reduction in weight in the conventional valve core is desired.

### MEANS OF SOLVING THE PROBLEMS

A valve core according to one embodiment of the present invention made to realize the object includes a core body screwed with a female screw part of a core mounting hole, the core body is formed of two components including a seal ring brought into close contact with a tapered part of the core mounting hole, the tapered part being on a deeper side than the female screw part, and a support base including a male screw part screwing with the female screw part and a sleeve part to which the seal ring is externally fitted, the valve core further including: a shaft part penetrating through the support base; a valve body provided at a tip of the shaft part, the valve body abutting on and becoming spaced apart from the seal ring to open and close the core mounting hole; an overhang part provided at the sleeve part so as to laterally overhang from a basal end of the sleeve part, the overhang part abutting on the seal ring from a basal end side, the tapered part abutting on the overhang part; a plate part provided at the support base so as to project to the basal end side from the basal end of the sleeve part including the overhang part, the plate part being plate-like having a pair of flat tool abutting surfaces against which a tool for screwing the male screw part with the female screw part is pressed, the male screw part in its entirety being formed at a lateral surface of the plate part; and a shaft receiving hole formed to penetrate through the plate part on an extension of a center hole of the sleeve part, the shaft part being inserted into the shaft receiving hole and the center hole of the sleeve part.

### BRIEF DESCRIPTION OF THE DRAWINGS

FIG. 1 is a cross-sectional view of a valve core according to a first embodiment mounted on a valve stem.
FIG. 2 is a cross-sectional view of the valve core.
FIG. 3 is a perspective view of the valve core.
FIG. 4 is a cross-sectional view of the valve core.
FIG. 5 is an enlarged cross-sectional view of the vicinity of a flange part.
FIG. 6 is an enlarged cross-sectional view of the vicinity of a male screw part.
FIG. 7 is a front view of the valve core.
FIG. 8 is a cross-sectional view of the valve core.
FIG. 9 is a perspective view of a valve core according to a second embodiment.
FIG. 10 is a cross-sectional view of the valve core.
FIG. 11 is a cross-sectional view of the valve core.
FIG. 12 is a perspective view of a valve core according to a variation.
FIG. 13 is a front view of the valve core according to the variation.
FIG. 14 is a cross-sectional view of the valve core according to the variation.
FIG. 15 is a cross-sectional view of the valve core according to the variation.
FIG. 16 is a cross-sectional view of a valve core according to a variation.
FIG. 17 is a perspective view of a valve core according to a variation.
FIG. 18 is a cross-sectional view of the valve core according to the variation.
FIG. 19 is a front view of the valve core according to the variation
FIG. 20 is a perspective view of a valve core according to a variation.
FIG. 21 is a cross-sectional view of the valve core according to the variation.
FIG. 22 is a perspective view of a valve core according to a variation.
FIG. 23 is a cross-sectional view of the valve core according to the variation.

### MODE FOR CARRYING OUT THE INVENTION

### [First embodiment]

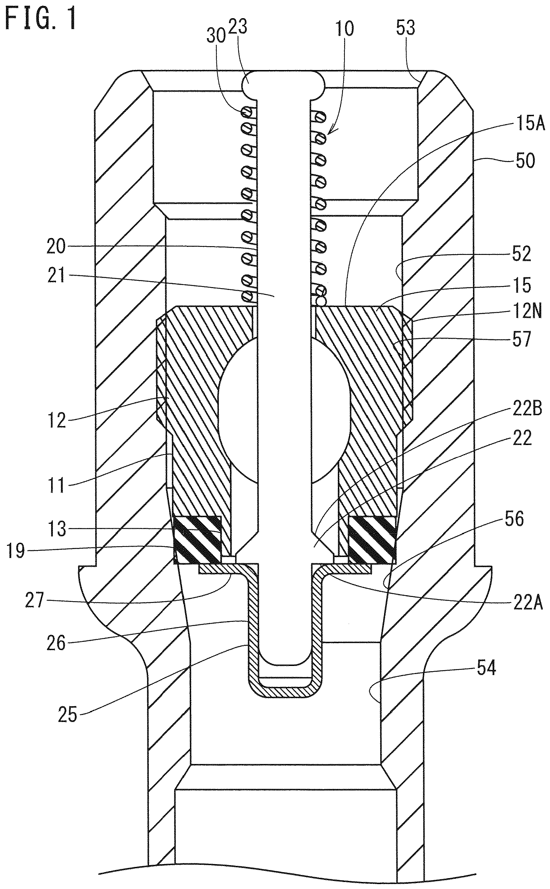

In the following, with reference to FIGS. 1 to 8, a description will be given of the valve core 10 according to the first embodiment. In FIG. 1, a valve stem, denoted by the reference character 50 and on which a valve core 10 is mounted, is tubular and extends in the top-bottom direction in FIG. 1. A core mounting hole 52 provided inside the valve stem 50 communicates with, for example, the inner space of a tire which is not illustrated. In the core mounting hole 52, from a charge port 53 which opens on the upper side in FIG. 1, the tire is charged with compressed air.

In the core mounting hole 52, at a position in the vicinity of the charge port 53, a female screw part 57 is formed. On the deeper side than the female screw part 57, a diameter-reduced part 54 which is smaller in inner diameter than the female screw part 57 is formed. Between the female screw part 57 and the diameter-reduced part 54, a tapered part 56 having its inner diameter gradually reduced toward the diameter-reduced part 54 is formed. The valve core 10 is inserted into the core mounting hole 52 from the charge port 53, and screw-fixed to the female screw part 57.

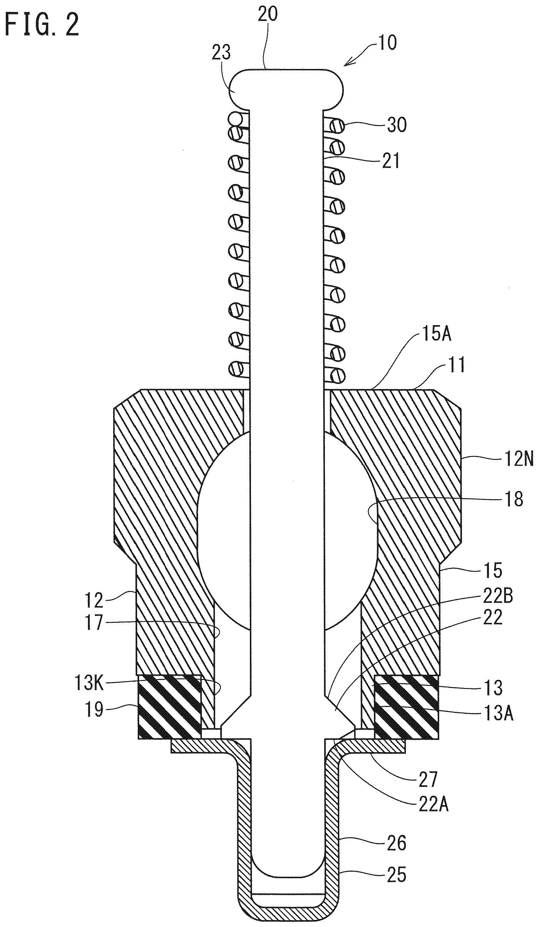

As illustrated in FIG. 2, the valve core 10 includes a core body 11; a movable shaft 20 (corresponding to "a shaft part" in the claims) linearly movably supported on the core body 11; and a compression coil spring 30 biasing the movable shaft 20 relative to the core body 11.

The movable shaft 20 is formed of a substantially circular columnar shaft body 21 and a valve body 25 mounted on one end of the shaft body 21. In the vicinity of one end of the shaft body 21, a projection part 22 that laterally projects is provided. The projection part 22 includes, on its one end side, a perpendicular surface 22A which is perpendicular to the axial direction of the shaft body 21. The projection part 22 includes, on its other end side, an inclined surface 22B which is inclined such as to gradually approach the outer surface of the shaft body 21 as it becomes nearer to the other end side of the shaft body 21. To the other end of the shaft body 21, a spring stop part 23 which laterally projects by swaging (corresponding to "a head part" in the claims) is provided.

The valve body 25 is cap-shaped, including a fitting sleeve part 26 (corresponding to "a cylindrical body" in the claims) whose one end is bottomed and externally fitting with the one end of the shaft body 21 and an annular plate part 27 (corresponding to "a collar" in the claims) laterally extending from the opening of the fitting sleeve part 26. In a state where the annular plate part 27 is abutted on the perpendicular surface 22A of the projection part 22 in the shaft body 21 and thereby positioned, the valve body 25 is fixed to the shaft body 21 by the fitting sleeve part 26 by swaging.

Next, a description will be given of the core body 11. The core body 11 is formed of, for example, metal such as brass. The core body 11 is formed of two components, namely; a support base 12 including a male screw part 12N screwing with the female screw part 57 of the core mounting hole 52 (see FIG. 1); and a seal ring 19 fitted to the support base 12. As illustrated in FIGS. 2 to 4, the support base 12 includes a sleeve part 13 and a plate part 15 arranged in sequence from the leading side in the inserting direction of the core mounting hole 52 (see FIG. 1).

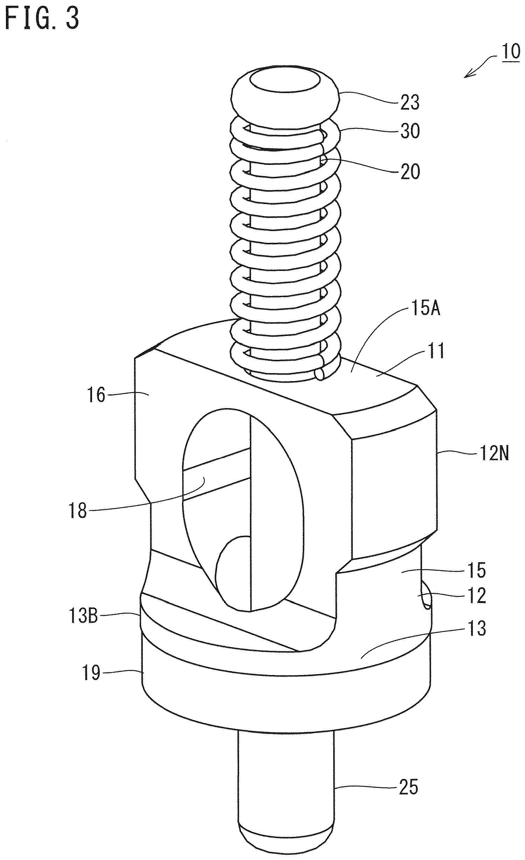

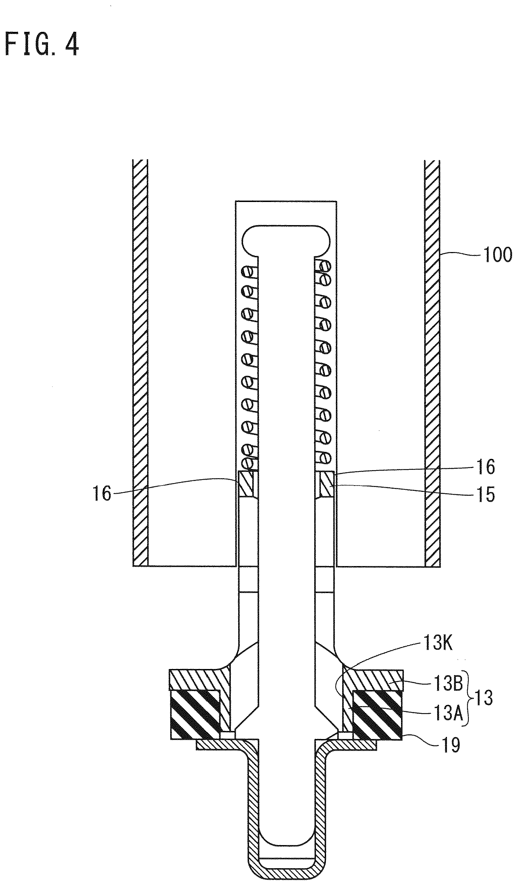

The sleeve part 13 includes a sleeve body 13A (see FIGS. 2 and 4) whose outer diameter is smaller than the inner diameter of the tapered part 56 of the core mounting hole 52 (see FIG. 1), and a flange part 13B (corresponding to "an overhang part in the claims, see FIGS. 3 and 4) laterally overhanging from the basal end of the sleeve body 13A. In the axial direction, the flange part 13B is 1/5 to 1/3 times as large as the whole sleeve part 13.

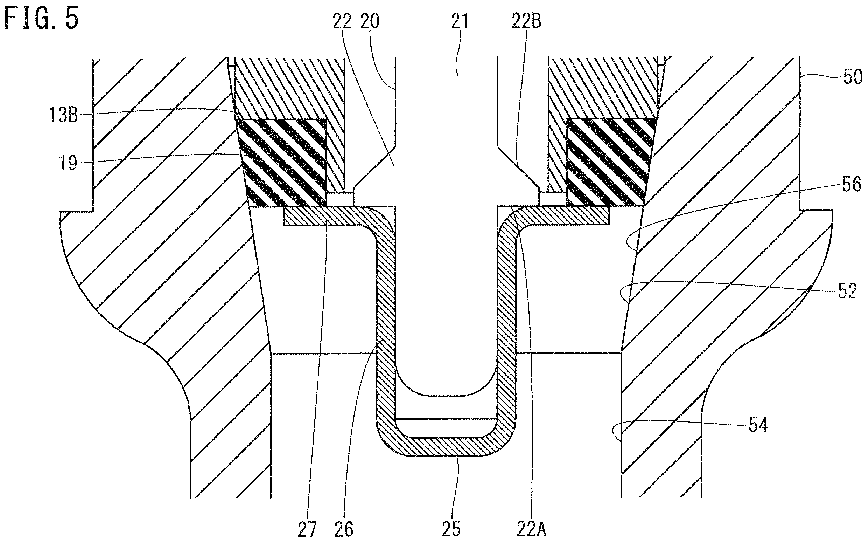

As described above, the seal ring 19 is mounted on the sleeve part 13. As illustrated in FIG. 4, the seal ring 19 is a quadrangular cross-sectional ring with a quadrangular cross-sectional shape. The seal ring 19 is externally fitted to the sleeve body 13A. The basal end-side surface of the seal ring 19 abuts on the flange part 13B. As illustrated in FIGS. 4 and 5, the outer diameter of the seal ring 19 is slightly smaller than the outer diameter of the flange part 13B. The length in the axial direction of the seal ring 19 is greater than the length of the tip-side portion of the sleeve body 13A further than the flange part 13B. Thus, the flange part 13B of the sleeve part 13 laterally projects further than the seal ring 19, and the seal ring 19 projects to the leading side in the inserting direction further than the tip opening of the sleeve part 13.

As illustrated in FIGS. 3 and 4, the plate part 15 has a shape of a vertically elongated plate that projects from the basal end surface of the sleeve part 13 (including the basal end-side surface of the flange part 13B) toward the basal end side, and includes a pair of flat tool abutting surfaces 16 juxtaposed to each other in the plate thickness direction. The tool abutting surfaces 16 of the plate part 15 are perpendicular to the basal end surface of the sleeve part 13. As illustrated in FIGS. 2 and 3, the outer surface of the plate part 15 is flush with the end surface of the flange part 13B in the sleeve part 13. Note that, the portion between the tool abutting surfaces 16 of the plate part 15 and the basal end surface of the sleeve part 13 is rounded.

A shaft receiving hole 17 is formed to penetrate through the plate part 15 on the extension of a center hole 13K of the sleeve part 13. On the tip side of the plate part 15, the shaft receiving hole 17 is flush with the center hole of the sleeve part 13. On the basal end side of the plate part 15, the shaft receiving hole 17 is smaller in inner diameter than the center hole 13K of the sleeve part 13.

The movable shaft 20 is inserted into the center hole 13K of the sleeve part 13 and the shaft receiving hole 17 of the plate part 15. The shaft body 21 is inserted into the compression coil spring 30 which is compressed between the basal end-side surface 15A of the plate part 15 and the spring stop part 23 of the movable shaft 20. By the resilience of the compression coil spring 30, the valve body 25 abuts on the seal ring 19 so as to close the core mounting hole 52 (see FIG. 1) from the inner space of the tire (not illustrated).

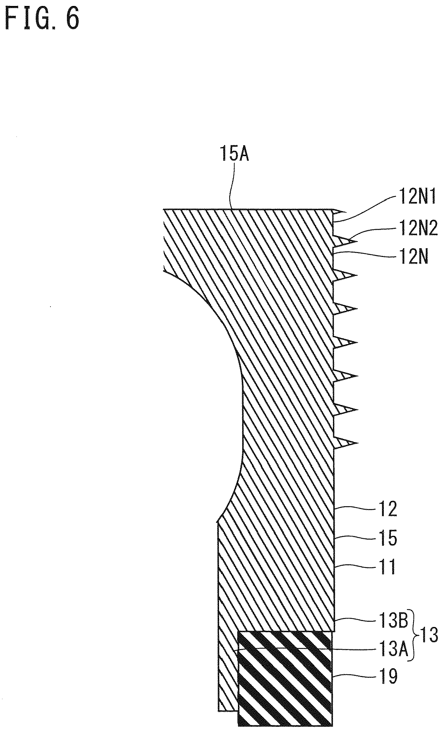

In the axial direction, the plate part 15 is about 3 to 5 times as large as the sleeve part 13. That is, in the axial direction, the plate part occupies about 3/4 to 5/6 of the support base 12. The whole male screw part 12N screwing with the female screw part 57 of the core mounting hole 52 (see FIG. 1) is formed at the basal end of the plate part 15. Furthermore, as in FIG. 6, a valley part 12N1 of the male screw part 12N is flush with the end surface of the flange part 13B in the sleeve part 13. Furthermore, in the male screw part 12N, the valley part 12N1 is greater in width in the axial direction than the ridge part 12N2.

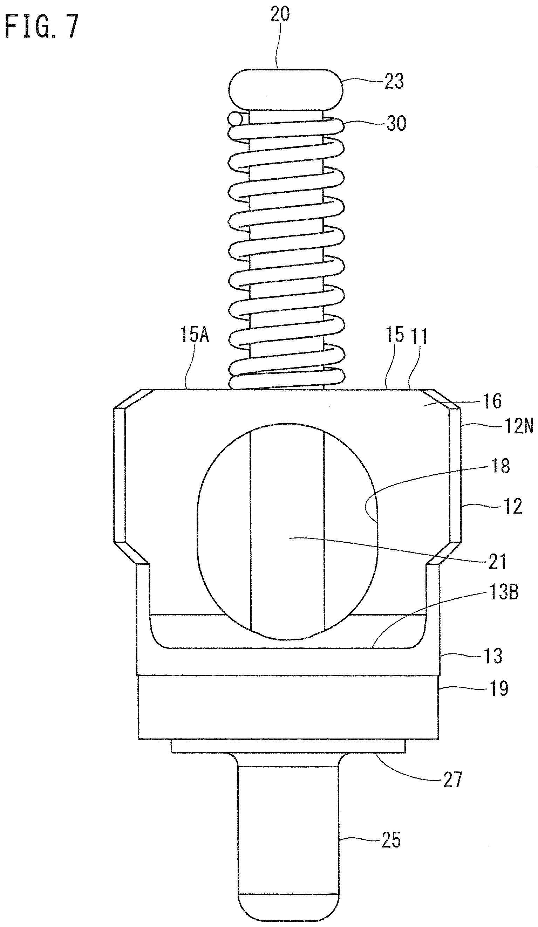

Furthermore, as illustrated in FIGS. 2 and 7, a perpendicular hole 18, which is perpendicular to the shaft receiving hole 17 and opens at the pair of tool abutting surfaces 16, is formed to penetrate through the plate part 15. The cross-sectional shape of the perpendicular hole 18 is a vertically elongated long hole which extends from the vicinity of the basal end surface of the sleeve part 13 to the vicinity of the basal end-side surface 15A of the plate part 15. The perpendicular hole 18 communicates with the shaft receiving hole 17.

Note that, the support base 12 is obtained by cutting a circular columnar body made of metal as follows. That is, for example, a first center hole of a circular cross-sectional shape is formed from the tip of the circular columnar body to the vicinity of the basal end, and a second center hole smaller in inner diameter than the first center hole is formed at the rest of the circular columnar body. Next, the male screw part 12N is formed at the basal end in the axial direction in the outer circumferential surface of the circular columnar body. Then, both sides of the second center hole in the radial direction are removed by an amount about 3/4 to 5/6 times as large as the circular columnar body from the basal end of the circular columnar body. Thus, the plate part 15 is formed. Then, the perpendicular hole 18 is formed to penetrate through the plate part 15 so as to be perpendicular to the first and second center holes. Furthermore, the tip of the portion which does not form the plate part 15 is cut so as to reduce its outer diameter in a stepped manner. Thus, the sleeve part 13 having the flange part 13B is formed.

The foregoing is the structure of the valve core 10 according to the present embodiment. Next, a description will be given of the operation and effect of the valve core 10. Fixing the valve core 10 inside the core mounting hole 52 includes: inserting the valve core 10 from the sleeve part 13 side into the core mounting hole 52, and screwing the female screw part 57 of the core mounting hole 52 with the male screw part 12N of the valve core 10. Here, as shown in FIG. 4, by pressing a tool 100 provided with a slit at its center against the tool abutting surfaces 16 of the plate part 15, the valve core 10 is screwed to reach the deeper side. As the male and female screw parts 57, 12N are increasingly screwed with each other, the valve core 10 shifts toward the deeper side of the core mounting hole 52 and the seal ring 19 enters the tapered part 56 to be brought into close contact. Thus, the core body 11 and the inner surface of the core mounting hole 52 are sealed. Then, when the flange part 13B abuts on the tapered part 56, the mounting of the valve core 10 on the core mounting hole 52 is completed. Note that, even when the seal ring 19 receives any force in the axial direction by the friction with the tapered part 56, the seal ring 19 abuts on the tip side surface of the flange part 13B, preventing misalignment in the axial direction.

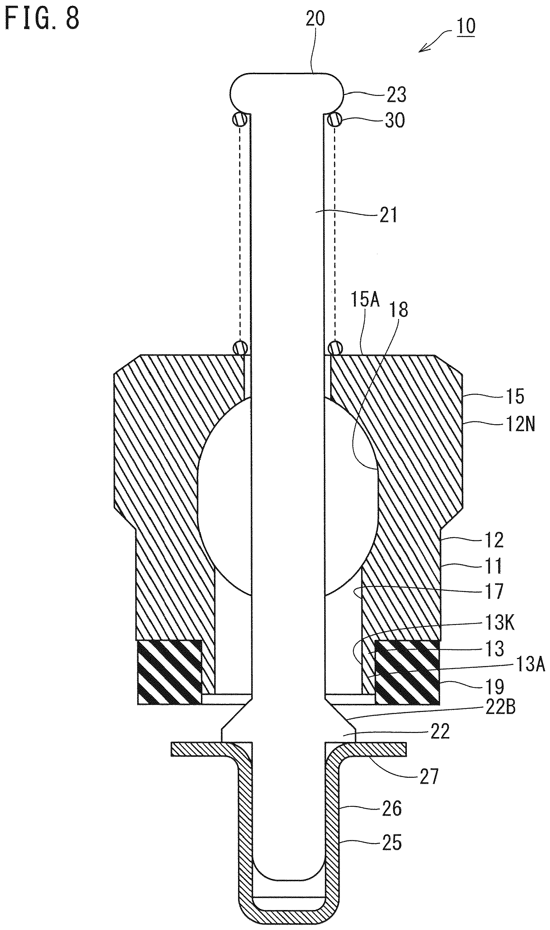

As illustrated in FIG. 1, in the valve core 10, the valve body 25 of the movable shaft 20 is constantly pressed against the seal ring 19 of the core body 11 by the resilience of the compression coil spring 30, thereby attaining the closed state. Charging the not-illustrated tire with compressed air via the core mounting hole 52 is performed as follows. That is, for example, a charge pump is coupled to the charge port 53 in the valve stem 50, and compressed air is fed into the core mounting hole 52. Then, as illustrated in FIG. 8, by the pressure of the charged compressed air, the movable shaft 20 linearly moves against the compression coil spring 30, creating a gap between the valve body 25 and the seal ring 19. Thus, the compressed air flows in from the charge port 53 side to the deeper side of the core mounting hole 52. When the charge pump is removed from the charge port 53, by the resilience of the compression coil spring 30 or the resilience and the pressure on the deeper side in the core mounting hole 52, the movable shaft 20 shifts toward the charge port 53 and the valve body 25 returns to the state where it closes the seal ring 19 of the core body 11. Here, even though the central axis of the core body 11 and the central axis of the movable shaft 20 are slightly displaced from each other, the inclined surface 22B of the projection part 22 of the movable shaft 20 is guided as being abutted on the seal ring 19 or the tip opening edge of the support base 12.

Here, in the valve core 10 according to the present embodiment, the whole male screw part 12N is formed in the plate part 15 in the support base 12 of the core body 11. That is, since the portions to the tip-side end or to the portion further on the tip side of the tip-side end of the male screw part 12N outer than the tool abutting surfaces 16 are cut off, the valve core 10 is reduced in weight than the conventional valve core which has its portions cut off only by the midway portion of the male screw part. Furthermore, in the axial direction, the plate part 15 occupies at least half the support base 12 (in the present embodiment, about 3/4 to 5/6). That is, since at least half the support base (in the present embodiment, about 3/4 to 5/6) outer than the tool abutting surfaces 16 is cut off, a further reduction in weight is achieved. Furthermore, in the male screw part 12N according to the present embodiment, by virtue of the valley part 12N1 being wider than the ridge part 12N2, a further reduction in weight is achieved.

Furthermore, in the flange part 13B, the surface opposite to the seal ring 19 serves as the basal end surface of the sleeve part 13 and is perpendicular to the pair of tool abutting surfaces 16. Therefore, the cut-off amount becomes larger, which further contributes to a reduction in weight. Furthermore, since the support base 12 is provided with the perpendicular hole 18 which opens to the pair of tool abutting surfaces 16, a further reduction in weight is realized. Additionally, since the perpendicular hole 18 communicates with the center hole 13K of the sleeve part 13 and the shaft receiving hole 17, when the valve is open, the fluid passing through the center hole 13K of the sleeve part 13 and the shaft receiving hole 17 flows also from the perpendicular hole 18 to the outside of the core body 11. This smooths the flow of the fluid. Furthermore, since the perpendicular hole 18 has a shape of a long hole elongated in the longitudinal direction (vertical direction) of the plate part 15, the cross-sectional area of the perpendicular hole 18 is increased. Thus, a further reduction in weight is achieved.

Furthermore, in the present embodiment, the valve body 25 is structured to be mounted on the shaft body 21 which is a separate component. Accordingly, for example as compared to the structure in which a circular columnar member is cut to obtain a valve body integrated with a shaft body, the manufacture of the movable shaft 20 is facilitated. Additionally, in the present embodiment, since the seal ring 19 and the flange part 13B abut on each other by their surfaces, the positioning of the seal ring 19 stabilizes.

### [Second embodiment]

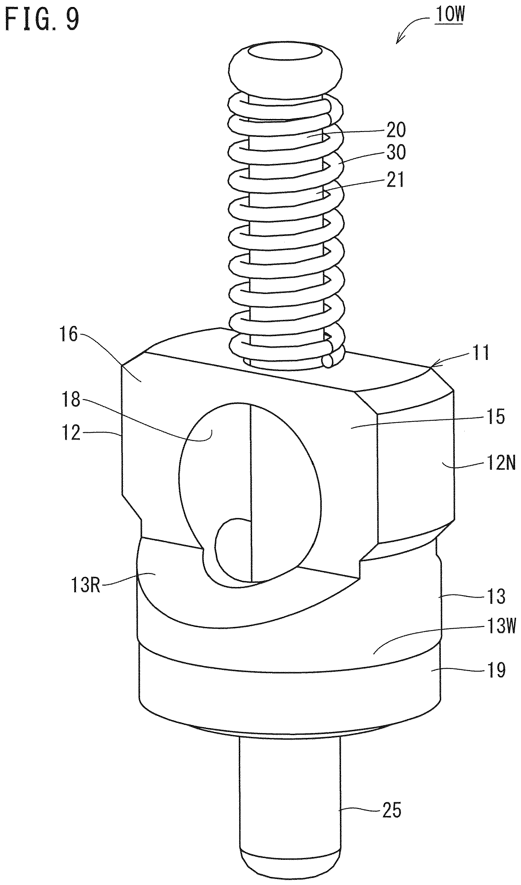

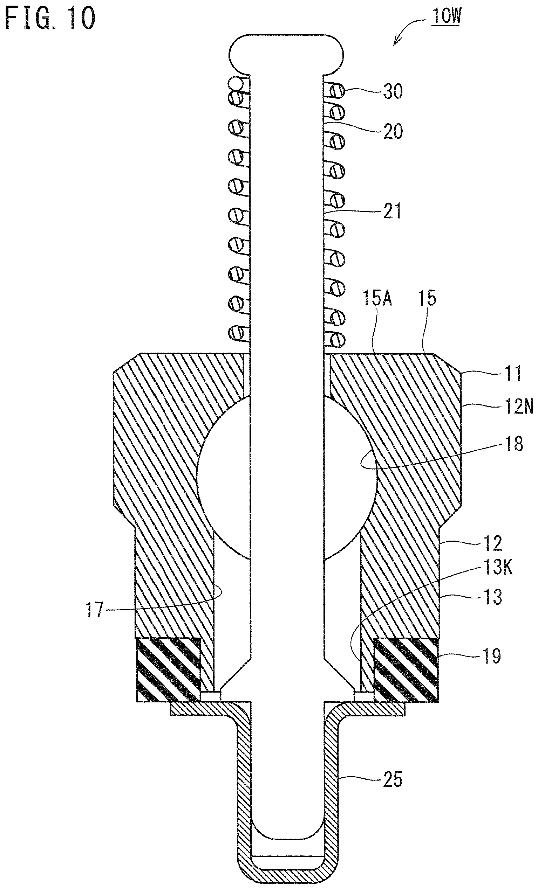

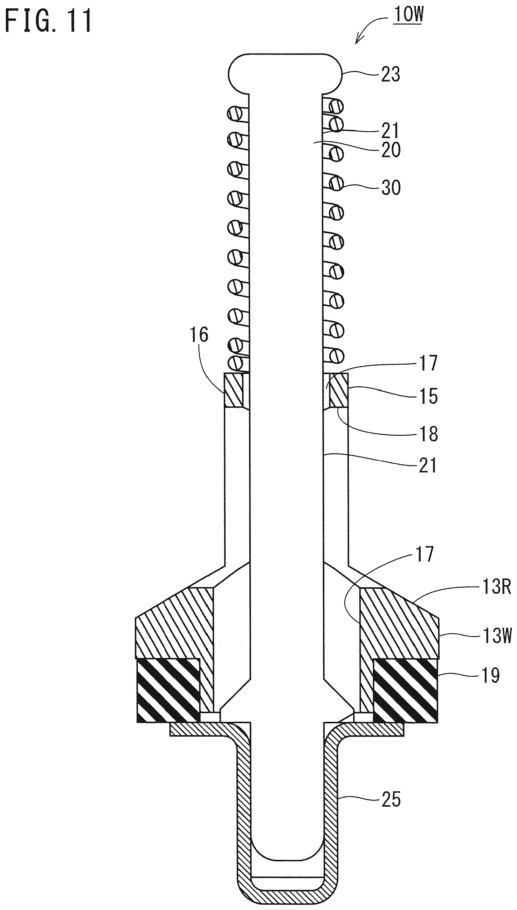

FIGS. 9 to 11 illustrate a valve core 10W according to the second embodiment. As illustrated in FIG. 9, the valve core 10W according to the present embodiment is provided with an overhang part 13W at the basal end of the sleeve part 13 whose tip-side surface (a surface on the seal ring 19 side) is perpendicular to the axial direction and whose surface on the basal end side (a surface on the plate part 15 side) is inclined and communicates with the tool abutting surfaces 16 of the plate part 15. This structure improves the strength of the support base 12. Note that, this surface on the basal end side corresponds to "an inclined communication part 13R" in the claims.

In the present embodiment, the perpendicular hole 18 is formed across the plate part 15 and the overhang part 13W. Note that, while the cross-sectional shape of the perpendicular hole 18 is circular in the present embodiment, the cross-sectional shape of the perpendicular hole 18 may be circular in the first embodiment.

### [Other embodiment]

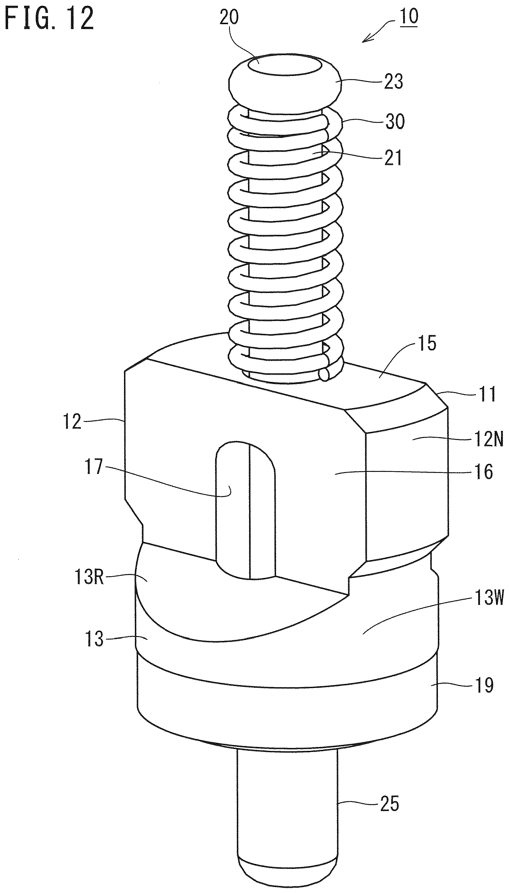

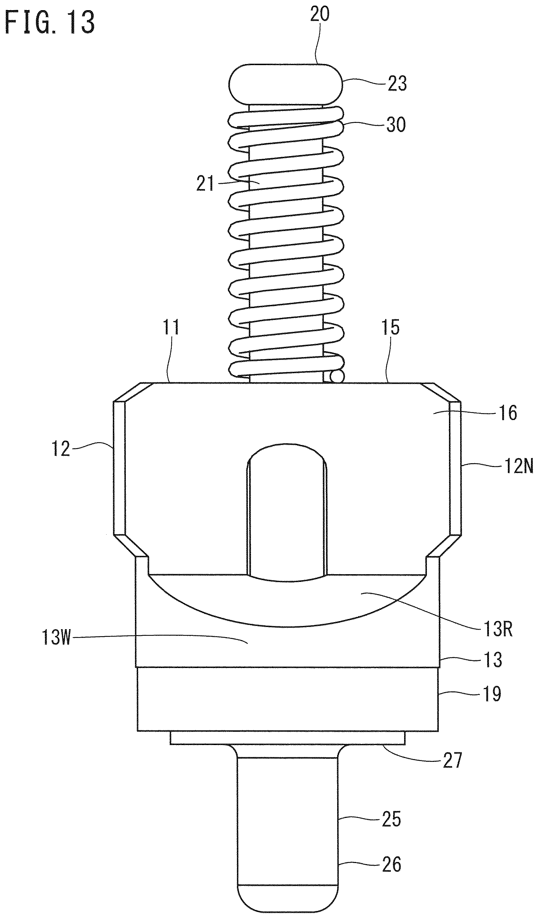

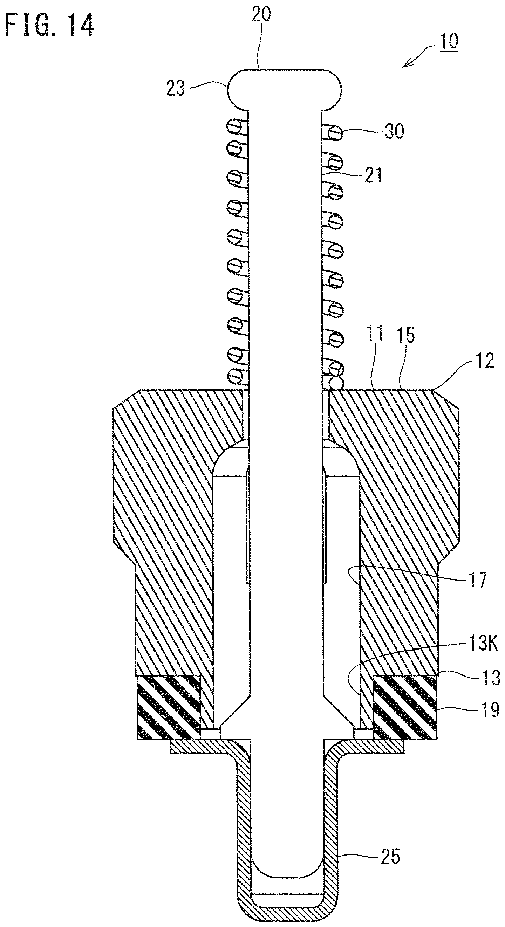

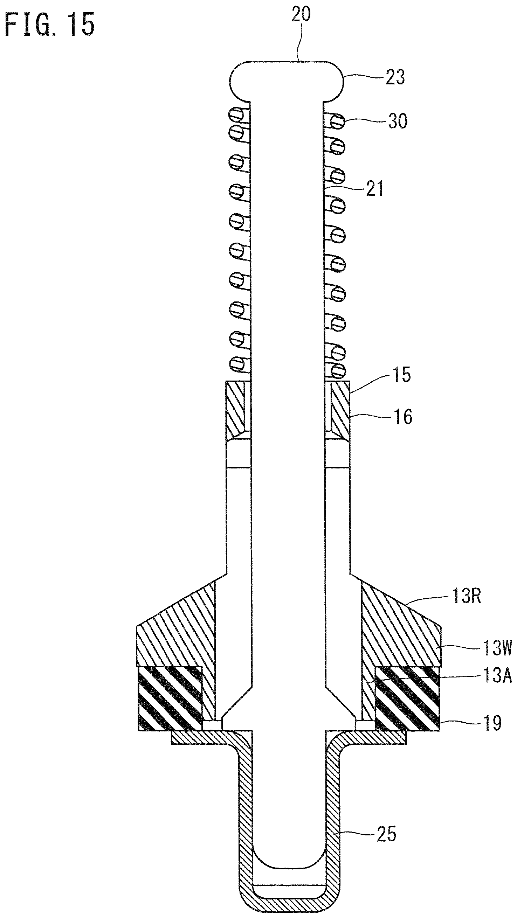

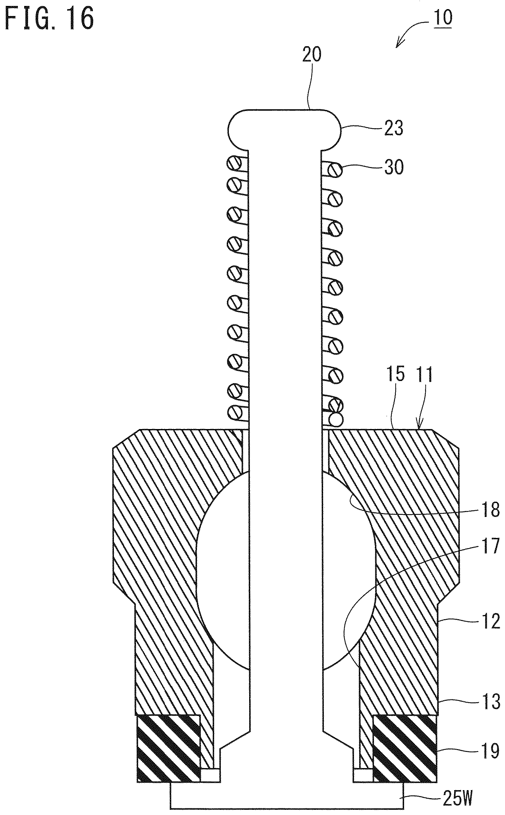

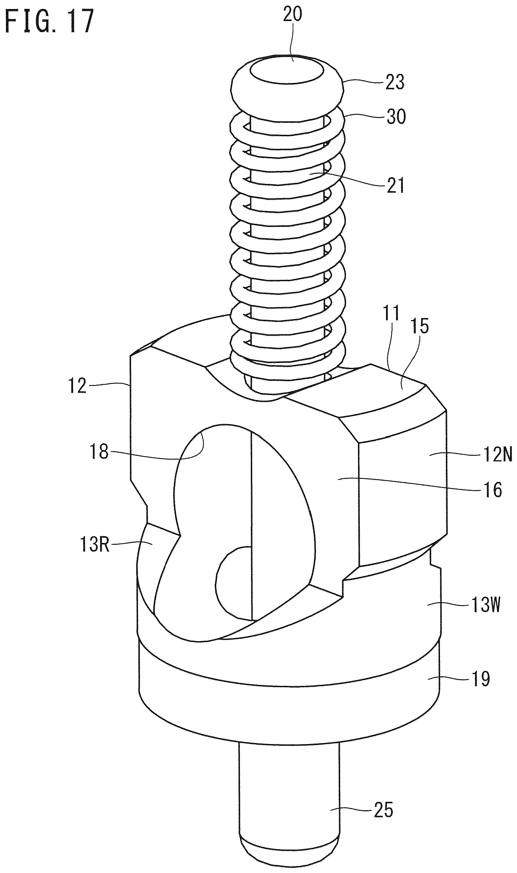

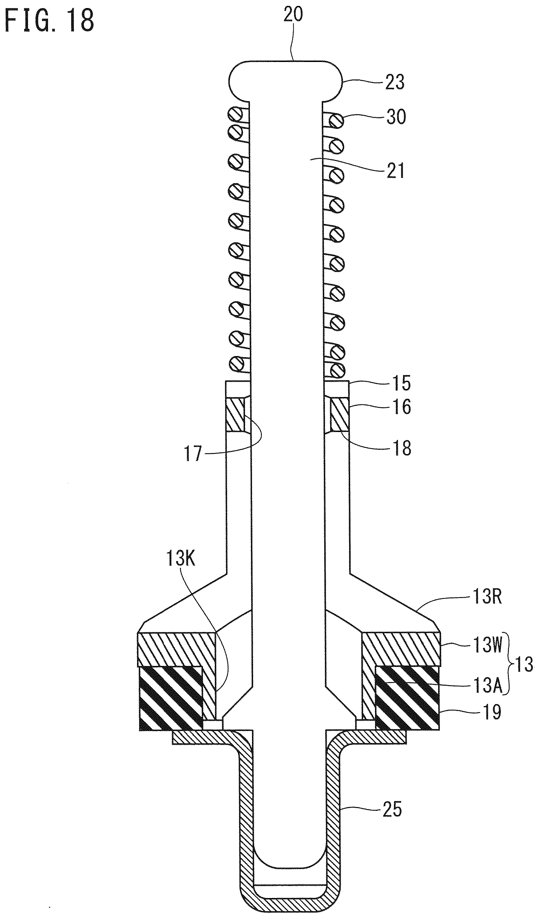

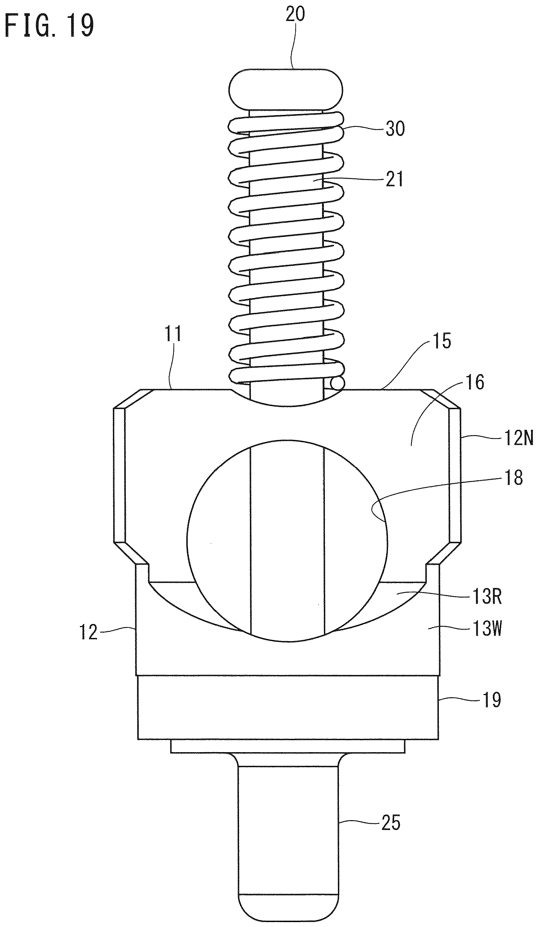

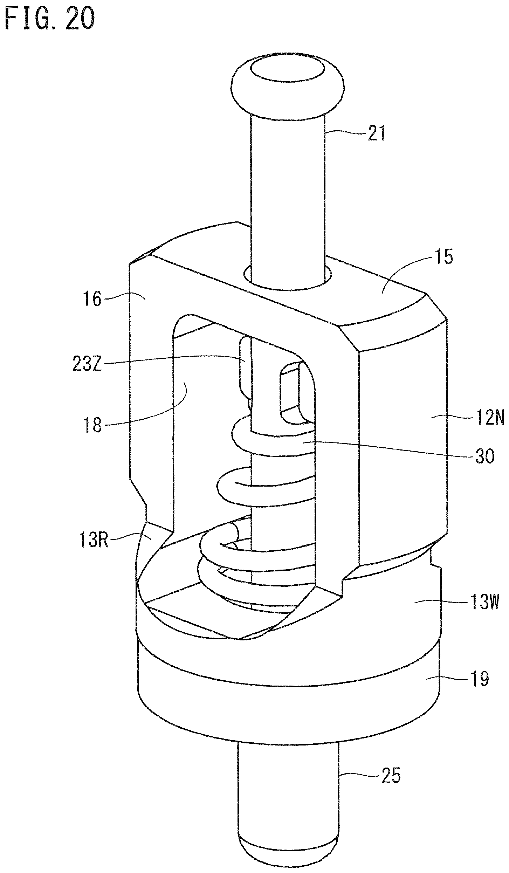

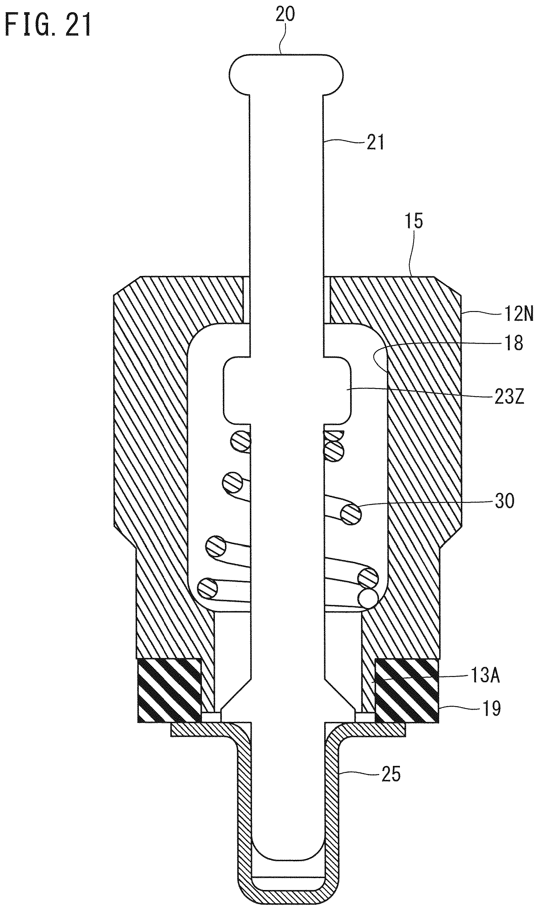

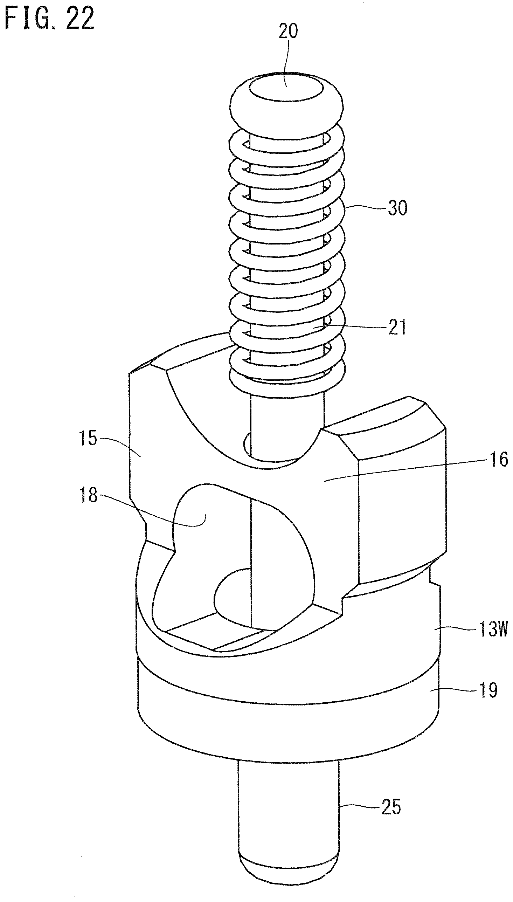

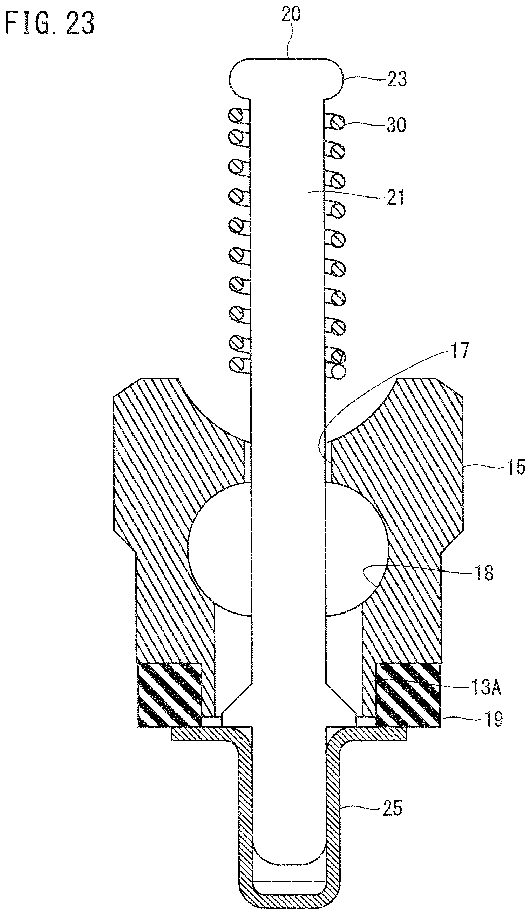

(1) While the perpendicular hole 18 is formed at the support base 12 in the above-mentioned embodiments, as illustrated in FIGS. 12 to 15, the perpendicular hole 18 may not be formed (FIGS. 12 to 15 illustrate an example of the second embodiment without the perpendicular hole 18). In this case also, the portion on the basal end side of the shaft receiving hole 17 (the portion with a larger inner diameter) opens at the tool abutting surfaces 16, so as to maintain the flow of the fluid.
(2) As illustrated in FIG. 16, the valve body 25W may be integrally formed with the movable shaft 20. This achieves a reduction in size as compared to the structure in which the valve body 25 as a separate component is fixed to the tip of the shaft body 21.
(3) In the second embodiment, the perpendicular hole 18 may be formed to extend on the tip side than the tip-side end of the inclined communication part 13R (see FIGS. 17 to 19).
(4) The cross-sectional shape of the perpendicular hole 18 may be rectangular or oval. FIGS. 20 and 21 illustrate the perpendicular hole 18 according to the second embodiment with a rectangular cross-sectional shape.
   In the above-mentioned embodiments, the compression coil spring 30 is disposed between the spring stop part 23 at the basal end of the movable shaft 20 and the basal end-side surface 15A of the plate part 15. Here, as illustrated in FIGS. 20 and 21, the compression coil spring 30 may be disposed between a lateral projection part 23Z laterally projecting from the midway portion of the movable shaft 20 and a tip-side inner surface of the perpendicular hole 18.
(5) As illustrated in FIGS. 22 and 23, the basal end surface of the support base 12 may not be flat. Instead, it may be curved and the opposite ends may project further than the central portion. In the above-mentioned embodiments, while the perpendicular hole 18 has a vertically elongated cross-sectional shape, the cross-sectional shape may be horizontally elongated so as to conform to the shape of the support base 12.
(6) In the above-mentioned embodiments, the valve core of the present invention is used in opening and closing the channel of compressed air. Here, the use is not limited to the channel of compressed air and is applicable to the channel of any fluid. For example, the valve core is applicable to the channel for nitride, oxygen, or a coolant for an air conditioner.

### DESCRIPTION OF THE REFERENCE NUMERAL

- 10: valve core
- 11: core body
- 12: support base
- 12N: male screw part
- 12N1: valley part
- 12N2: ridge part
- 13: sleeve part
- 13B: flange part (overhang part)
- 13W: overhang part
- 15: plate part
- 16: tool abutting surface
- 17: shaft receiving hole
- 18: perpendicular hole
- 19: seal ring
- 20: movable shaft (shaft part)
- 25: valve body
- 30: compression coil spring
- 52: core mounting hole

## Claims

1. A valve core comprising:
a core body screwed with a female screw part of a core mounting hole, the core body is formed of two components including
a seal ring brought into close contact with a tapered part of the core mounting hole, the tapered part being on a deeper side than the female screw part, and
a support base including a male screw part screwed with the female screw part and a sleeve part to which the seal ring is externally fitted, the valve core further comprising:
a shaft part penetrating through the support base;
a valve body provided at a tip of the shaft part, the valve body abutting on and becoming spaced apart from the seal ring to open and close the core mounting hole;
an overhang part provided at the sleeve part so as to laterally overhang from a basal end of the sleeve part, the overhang part abutting on the seal ring from a basal end side, the tapered part abutting on the overhang part;
a plate part provided at the support base so as to project to the basal end side from the basal end of the sleeve part including the overhang part, the plate part being plate-like having a pair of flat tool abutting surfaces against which a tool for screwing the male screw part with the female screw part is pressed, the male screw part in its entirety being formed at a lateral surface of the plate part; and
a shaft receiving hole formed to penetrate through the plate part on an extension of a center hole of the sleeve part, the shaft part being inserted into the shaft receiving hole and the center hole of the sleeve part.

2. The valve core according to claim 1, wherein, in an axial direction of the shaft part, the plate part occupies at least half the support base.

3. The valve core according to claim 1 or 2, wherein, in the overhang part, a surface opposite to the seal ring is perpendicular to the pair of tool abutting surfaces.

4. The valve core according to claim 1 or 2, wherein, in the overhang part, a surface opposite to the seal ring is provided with an inclined communication part that is inclined and communicates with the pair of tool abutting surfaces.

5. The valve core according to any one of claims 1 to 4, wherein a perpendicular hole penetrates through the support base, the perpendicular hole being perpendicular to the axial direction of the sleeve part and opens at the pair of tool abutting surfaces.

6. The valve core according to claim 5, wherein a cross-sectional shape of the perpendicular hole is an oval, an ellipse, or a rectangle elongated in a longitudinal direction of the plate part.

7. The valve core according to any one of claims 1 to 6, further comprising:
a head part formed at a basal end of the shaft part to laterally project; and
a compression coil spring into which the shaft part is inserted between the plate part and the head part.

8. The valve core according to claim 5 or 6, further comprising:
a lateral projection part formed at a midway portion of the shaft part to laterally project; and
a compression coil spring into which the shaft part is inserted between a tip-side inner surface of the perpendicular hole of the support base and the lateral projection part.

9. The valve core according to any one of claims 1 to 8, wherein
the valve body has a shape of a cap including a cylindrical body having its one end bottomed and provided with a collar extending from its other end, and
the cylindrical body is fixed by swaging to a tip of the shaft part.

10. The valve core according to any one of claims 1 to 9, wherein
the seal ring has a shape of a quadrangular cross-sectional ring whose cross-sectional shape is quadrangular, and
the overhang part and the seal ring abut on each other by their surfaces.

11. The valve core according to any one of claims 1 to 10, wherein a width of a valley part is greater than a width of a ridge part in the male screw part.
